# DEMANDE DE BREVET EUROPEEN

(11) **EP 4 843 776 A1**
(43) Date de publication de la demande: **25.11.2026**
(21) Numéro de dépôt: 25178227.2
(22) Date de dépôt: 22.05.2025
(51) Int. Cl.: B32B 18/00, C04B 35/56, C04B 35/58, C04B 35/593, C04B 35/645, G04B 45/00, G04B 19/12, G04B 37/22

(54) **COMPOSANT HORLOGER CÉRAMIQUE MULTIPHASE AYANT UN ASPECT MARBRÉ**

(71) Demandeur: Comadur S.A., 2400 Le Locle (CH)
(72) Inventeur: ACTIS-DATTA, Arnaud, 2854 Bassecourt (CH); BOUCHET, Julen, 68480 Liebsdorf (FR)
(74) Mandataire: ICB SA

(57) **Abrégé**

L'invention concerne un composant horloger ou bijoutier comprenant au moins une phase majoritairement composée de Si₃N₄, et au moins une phase de TiN, de TiC et/ou de TiCN, ledit composant présentant une première couleur et au moins une seconde couleur différente de la première, la seconde couleur définissant des veines, des marbrures, des îlots ou des globules décoratifs au-dessus la première couleur. L'invention concerne aussi un procédé d'obtention d'un tel composant.

## Description

### Domaine technique de l'invention

La présente invention concerne des articles, en particulier des composants horlogers ou bijoutiers, tels que des cadrans et des lunettes de montres comprenant un matériau composite céramique, de type céramique multiphase TiN-Si₃N₄, et un procédé permettant de produire sur mesure des articles céramique monoblocs, présentant un aspect visuel stratifié doré, argenté ou rosé (rappelant les couleurs des 3 ors) similaire à du marbre ou une roche nervurée. Le procédé décrit offre la possibilité d'une réalisation proche de la forme finale souhaitée.

### Arrière-plan technologique

En horlogerie, il est désirable de produire des surfaces ayant l'apparence d'un marbre, comportant des veines dorées, argentées ou roses.

Les composants horlogers haut de gamme dorés (principalement en or) emploient historiquement des alliages 18 ct (Au 750 ‰). Leur dureté, même écrouie, ne dépasse pas 200 HV10 ; l'or reste ductile (module d'élasticité ≈ 80 GPa) et se raye facilement. La mise en forme de décors exige donc des durcissements superficiels coûteux (plaquages céramo-métalliques, nitruration laser) qui altèrent la couleur.

Le marbre est prisé pour son veinage, mais il n'existe pas de gisements naturels présentant des strates réellement dorées, argentées ou roses stables. Les teintes sont dues à des oxydes ferriques ou carbonates colorés qui ternissent généralement au polissage. Sa dureté faible (≈ 3 Mohs) impose un usinage par enlèvement de matière fragile : les pertes lors de cette étape peuvent être importantes.

Le nitrure de silicium dense (≥ 98 % théorique) offre dureté et ténacité, mais sa couleur gris-anthracite peu contrastée limite les effets décoratifs recherchés en horlogerie contemporaine.

### Résumé de l'invention

La présente invention a pour objet de pallier les inconvénients précités en proposant une nouvelle composition de céramique à base de nitrure de silicium, de nitrure de titane, de carbure de titane et/ou de carbonitrure de titane, et un procédé permettant de fabriquer un article horloger présentant une dureté élevée combinée à un aspect marbré à reflet métallique.

Un premier aspect de la présente invention concerne un procédé de fabrication d'un composant horloger comprenant les étapes de :
- mettre à disposition un moule ;
- déposer les poudres dans le moule préformé conducteur réfractaire avec une première couche d'un premier mélange comprenant au moins une poudre sélectionnée parmi le groupe consistant en Si3N4, TiC, TiN et TiCN ;
- ajouter au moins une seconde couche d'au moins un second mélange comprenant au moins une poudre sélectionnée parmi le groupe consistant en Si₃N₄, TiC, TiN et TiCN, le au moins un second mélange ayant une couleur et une composition différente du premier mélange, et la au moins une seconde couche recouvrant partiellement la première couche, de façon à créer un motif aléatoire ou prédéfini sur la première couche ;
- effectuer un cycle de frittage type flash ou SPS opéré avec une température de montée de préférence d'au moins 50°C par minute, avantageusement d'au moins 90°/minute, de préférence appliquée jusqu'à une température plateau comprise entre 1500°C et 2000°C. La température plateau est, de préférence, maintenue constante entre 2 minutes et 40 minutes. La pression appliquée lors du cycle de frittage flash est de préférence d'au moins 15 MPa, de préférence plus de 40 MPa.
- refroidir et démouler de l'article monobloc obtenu.

Le moule est de préférence composé essentiellement de graphite.

Le motif obtenu peut être contrôlé par un dépôt manuel, aléatoire ou non, ou selon un processus automatisé.

De préférence, les couches successives sont déposées dans le moule préformé, de préférence avec une inclinaison afin de faciliter la dépose, la première couche ne couvrant qu'une faible partie du fond du moule. Les couches ne sont pas déposées dans l'axe du moule afin de réaliser des motifs de strates.

Afin de faciliter le frittage, la poudre de nitrure de silicium (Si₃N₄) comprend de préférence entre 1 % et 5 % en masse d'oxyde d'aluminium (Al₂O₃). Dans ce cas, la poudre de Si₃N₄ comprend aussi avantageusement entre 1 % et 8 % en masse d'oxyde d'Yttrium (Y₂O₃) de façon à former lors du frittage une phase liante YAG (Y₃Al₂(AlO₄)₃). Le pourcentage total de la phase liante étant de 10-12 % massique.

Pour modifier la teinte de la phase de nitrure de silicium 1 à 2 % en masse d'oxyde de titane (TiO₂) peut avantageusement être ajouté à l'un des mélanges de poudre comprenant une majorité de Si₃N₄.

L'ajout de plus d'une couche de compositions différentes sur la première couche, peut avantageusement permettre de produire des motifs plus complexes de trois ou plus de couleurs.

Une étape de polissage final du composant horloger, ou toute autre finition horlogère, peut avantageusement être ajoutée en fin de processus de mise en forme, sans exclure d'éventuelles étapes de décoration ultérieures (coating,...).

La présente invention concerne aussi un composant horloger comprenant au moins une phase majoritairement composée de Si₃N₄, et au moins une phase comprenant majoritairement du TiN, du TiC et/ou du TiCN, ledit composant présentant une première couleur correspondant à l'une des phases et au moins une seconde couleur différente de la première et correspondante à une autre phase, la seconde couleur définissant des veines, des marbrures, des îlots ou des globules décoratifs au-dessus la première couleur.

Avantageusement la première ou la seconde couleur est dorée ou argentée. Par dorée, la présente description entend les trois couleurs or connues, à savoir l'or jaune, rose ou blanc.

Avantageusement, le composant horloger de l'invention est obtenu par le procédé décrit dans le premier aspect de l'invention.

Le composant horloger de l'invention est avantageusement un cadran, une lunette ou une carrure.

Le composant horloger de l'invention présente avantageusement au moins l'une des caractéristiques suivantes :
- une dureté supérieure ou égale à 1200 HV10 ;
- une densité de 2,70 à 3,3 g cm⁻³ ;
- une ténacité supérieure à 4 MPa.√m.

D'autres caractéristiques et avantages de l'invention apparaîtront à la lecture de la description détaillée qui va suivre, en référence aux figures annexées.

### Brève description de la figure

La figure 1 représente une ébauche de cadran réalisée avec le matériau céramique selon l'invention.
La figure 2 représente une autre ébauche de cadran réalisée avec le matériau céramique selon l'invention.
La figure 3 représente un moule rempli à 45° selon un aspect de l'invention.

### Description détaillée de l'invention

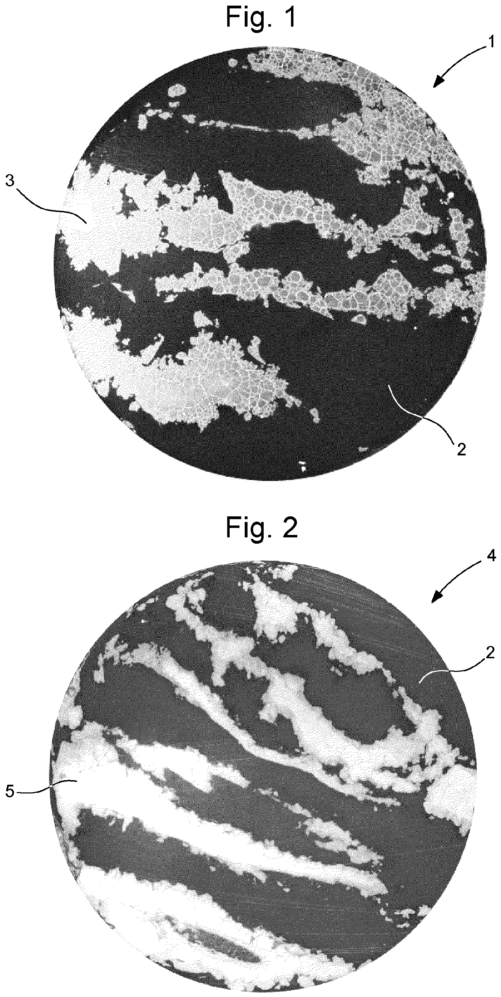

La présente invention se rapporte à un article décoratif réalisé dans un matériau céramique à base de nitrure de silicium (Si₃N₄), de nitrure de titane (TiN), de carbure de titane (TiC) et/ou de carbonitrure de titane (TiCN). Dans le domaine horloger, cet article peut être un composant d'habillage tel qu'une carrure, un fond, une lunette, un cadran, etc. A titre illustratif, des ébauches de cadrans 1, 4 ont été réalisées avec le matériau céramique selon l'invention et sont représentés aux figures 1 et 2.

L'article en céramique selon l'invention comporte une phase plus ou moins sombre, majoritairement composée de nitrure de silicium (Si₃N₄) 2, et une phase dorée majoritairement composée de nitrure de titane (TiN) 3, de carbure de titane (TiC) 5 ou de carbonitrure de titane (Ti(C,N)) éventuellement dopé au chrome. Ces matériaux (TiN, TiC, TiCN) permettent de donner un aspect métallique selon leur composition d'or jaune (TiN), d'or blanc (TiC) ou intermédiaire ou rosé pour les mélanges intermédiaires, éventuellement dopé au chrome.

La distribution hétérogène des différentes poudres en surface permet de définir des motifs dorés (TiN, TiC, Ti(C,N)) sur un fond sombre de nitrure de silicium, ou, inversement, des motifs de nitrure de silicium sur un fond de matrice à base de nitrure ou de carbure de titane. Les motifs obtenus peuvent se présenter sous forme de veines, d'îlots, de globules, ou de marbrures.

Le nitrure de silicium peut également être de plusieurs compositions. Avantageusement, le nitrure de silicium comprend (est constitué de) :
- Si3N4 - nitrure de silicium de base (au moins 85 % en poids) ;
- Y2O3 - oxyde d'yttrium (1 à 8 % en poids) ;
- Al2O3 - oxyde d'aluminium (1 à 5 % en poids) ;
- 0 à 5 % d'autres éléments.

Dans le mélange Si₃N₄, le nitrure de silicium est le matériau principal, les deux autres oxydes ayant un rôle de liant. Ces deux oxydes peuvent se combiner lors du frittage pour former une phase YAG (Y₃Al₂(AlO₄)₃). L'oxyde d'aluminium peut aussi, seul, jouer ce rôle de liant. Il est néanmoins possible de fritter le nitrure de silicium sans liant additionnel.

Il est possible de changer la couleur du nitrure de silicium en ajoutant certains composants à la formulation de base : l'oxyde de titane permet une coloration plus sombre, allant jusqu'au noir, le nitrure de titane permet une coloration similaire au bronze, tandis qu'une composition ternaire TiN + TiO2 + SiC permet des colorations de bruns-marrons à cuivrées.

Le fond de l'objet est défini par l'accumulation des couches successives dans le moule préformé. Ce moule, donnant la forme finale du composant horloger envisagé est composé d'un matériau réfractaire conducteur tel que du graphite, le frittage final étant avantageusement fait par frittage flash. Cette phase formera la couleur de fond du composant final.

Le frittage flash, ou spark plasma sintering (SPS), en anglais, est une méthode de frittage par pressage à chaud, utilisant l'effet joule et/ou effet inductif pour chauffer la poudre dans un creuset cylindrique entre deux électrodes réfractaires et conductrices. Généralement, lesdites électrodes préformées sont essentiellement composées de graphite, et l'opération est faite sous atmosphère inerte ou sous vide. L'ensemble est soumis à une pression de quelques dizaines de mégapascals sous l'action d'une presse. Un courant continu ou alternatif de plusieurs kiloampères, pulsé ou non, est appliqué entre les électrodes avec une tension de quelques volts. Dans la présente invention, les électrodes sont préformées, formant un moule, de façon à donner directement la forme souhaitée à l'objet fritté. Le chauffage par effet joule directement au sein de la poudre à fritter permet d'atteindre des vitesses de chauffage et de refroidissement très élevées (jusqu'à 1000 K/min), ce qui réduit la durée totale du processus à quelques dizaines de minutes seulement. La rapidité du chauffage et du refroidissement a pour effet de limiter la croissance des grains et donc de préserver la finesse de la microstructure du matériau, ce qui optimise les propriétés mécaniques - dureté, ténacité - du matériau, dont la densité dépasse souvent 90 % de la valeur théorique du matériau, grâce à une porosité faible. Cela permet également de lier des matières de natures différentes, avec un transfert d'énergie important sur une durée courte.

Pour parvenir à un aspect marbré, ou veiné, ou, plus généralement, de façon hétérogène latéralement, une ou plusieurs couches successives de poudres de couleurs différentes peuvent avantageusement être déposées sur le fond du moule selon les motifs désirés. Par exemple, à la figure 1, une couche discontinue de nitrure de titane (TiN) 3 a été déposée sur un fond de nitrure de silicium (Si₃N₄) 2, donnant un cadran 1 gris foncé 2 avec des marbrures dorées 3. Un autre exemple de cadran 4 est montré à la figure 2 où le nitrure de titane (TiN) a été remplacé par du carbure de titane (TiC) 5 donnant cette fois lieu à des marbrures argentées 5.

L'effet de zébrure peut aussi être obtenu en remplissant des couches successives dans un moule incliné. La poudre déposée ne recouvrant pas complétement le fond du moule, l'ajout d'autres couches crées des zébrures sur le fond du moule et à la surface de l'objet

Le procédé de fabrication du composant horloger comprend les étapes suivantes :
a) mélange des poudres Si₃N₄ et nitrure de titane / carbure de titane / carbonitrure de titane selon les proportions prédéfinies pour chacune des couches à déposer (i.e. un mélange distinct pour chaque couche successives) ;
b) remplissage du moule par dépose de strates successives des différents mélanges produits à l'étape précédente. Cette dépose peut être faite manuellement, et, dans ce cas, le moule peut être incliné à 45° pour faciliter une dépose à la cuillère ;
c) pressage et frittage simultané par frittage flash (SPS en Anglais), avec montée en température rapide d'au moins 50°C min⁻¹ jusqu'à un palier compris entre 1500°C et 2000°C, maintien du palier thermique au moins 2 minutes à une pression constante de 40 MPa. Utilisation d'un gaz neutre (type argon, azote etc) pour le frittage ;
d) refroidissement contrôlé et démoulage des pièces directement dans leur forme finale.

Les pièces obtenues directement à la forme finale comprennent des disques d'un diamètre allant de 10 à 50 mm (voir plus), avec une épaisseur finale après frittage de 1 à 15 mm. Ces dimensions conviennent particulièrement bien à la fabrication sur mesure de composants horlogers tels que les cadrans, les lunettes et les carrures.

Le composite céramique selon l'invention présente plusieurs avantages significatifs :
- un aspect esthétique similaire au marbre avec un veinage doré ou argenté obtenu directement à la forme finale souhaitée, sans nécessiter de découpe dans la masse ;
- une dureté élevée mesurée supérieur ou égale à 1200 HV10, garantissant une bonne résistance à l'usure ;
- une ténacité d'environ 4 MPa.√m ;
- une densité de 2,70 à 3,3 g cm⁻³, assurant une légèreté appréciable ;
- une facilité de polissage élevée, améliorant sensiblement la finition esthétique ;
- une précision dimensionnelle accrue grâce à la réalisation directe par SPS.

Les mesures de dureté sont des duretés HV10, c.à.d. une dureté Vickers réalisées sous une charge de 10 kg. La ténacité a été déterminée sur base des mesures des longueurs des fissures aux quatre extrémités des diagonales de l'empreinte de dureté selon la formule : ${K}_{1 C} = 0.0319 \frac{P}{{al}^{1 / 2}}$ avec P qui est la charge appliquée (N), a qui est la demi-diagonale (m) et l qui est la longueur de la fissure mesurée (m).

### Exemples

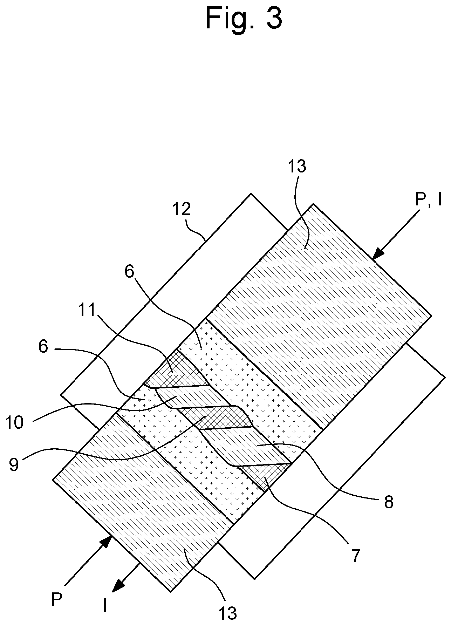

L'ébauche de cadran de la figure 1 a été produit selon le canevas suivant, représenté à la figure 3 :
- mélange des différentes poudres Si₃N₄ et nitrure de titane selon des proportions prédéfinies (i.e. un mélange de poudre pour la couche partielle de fond Si₃N₄ et un mélange distinct pour la couche décorative de TiN) ;
- remplissage du mélange pulvérulent de Si₃N₄ 7 pour former une couche de fond partielle dans un moule en graphite préformé 6 à la géométrie exacte du cadran souhaité ;
- remplissage du moule par dépose de marbrures de TiN 8, ce remplissage étant effectué manuellement, le moule étant incliné à 45° pour faciliter une dépose à la cuillère (des couches successives 9, 10, 11 sont déposées en fonction du nombre de marbrures désirées) ;
- pressage et frittage simultanés par frittage flash (SPS en Anglais), avec montée en température rapide à 95°C min⁻¹ jusqu'à 1750°C, palier thermique de 10 minutes à une pression constante d'au moins 40 MPa. Le frittage est fait sous atmosphère inerte ;
- refroidissement contrôlé à environ 90°C/min et démoulage des pièces directement dans leur forme finale.

La poudre de Si₃N₄ comprend ici environ 10 % de YAG pour faciliter le frittage.

L'ébauche de cadran 1 obtenue est représentée à la figure 1. Le fond 2 y est de couleur gris foncé, tandis que les marbrures 3 sont dorées.

Tel que représenté à la figure 3, le dispositif de frittage comprend :
- deux parties préformées 6 formant le moule ;
- une matrice12 comportant des parois cylindriques ;
- deux poinçons (12 du bas) et 13 permettant d'appliquer une pression P et un courant l au moule.

Un second exemple de réalisation est représenté à la figure 2. Dans cet exemple, les conditions opératoires sont identiques à l'exemple 1 à l'exception du TiN qui a été remplacé par du TiC. Le fond 2 y est de couleur gris foncé, tandis que les marbrures 3 sont argentées.

## Revendications

1. Procédé de fabrication d'un composant horloger ou bijoutier comprenant les étapes de :
- remplissage d'un moule préformé (6) conducteur réfractaire avec une première couche (7) d'un premier mélange comprenant au moins une poudre sélectionnée parmi le groupe consistant en Si₃N₄, TiC, de TiN et TiCN ;
- ajout d'au moins une seconde couche (8, 9, 10, 11) d'au moins un second mélange comprenant au moins une poudre sélectionnée parmi le groupe consistant en Si₃N₄, TiC, TiN et TiCN, le au moins un second mélange ayant une couleur et une composition différente du premier mélange, et la au moins une seconde couche (8, 9, 10, 11) ne recouvrant pas entièrement la première couche, de façon à créer en surface un motif aléatoire ou prédéfini sur la première couche (7) ;
- pressage et frittage de la première couche et de ladite au moins seconde couche à la forme du moule par frittage flash ;
- refroidissement et démoulage du composant horloger (1, 4) obtenu.

2. Procédé selon la revendication 1 dans lequel au moins un des premier et second mélange comprend de la poudre de Si₃N₄ ledit premier ou second mélange comprenant en outre entre 1 % et 5 % en masse d'oxyde d'aluminium (Al₂O₃).

3. Procédé selon la revendication 2 dans lequel le premier ou second mélange comprend en outre entre 1 % et 8 % en masse d'oxyde d'Yttrium (Y₂O₃) de façon à former lors du frittage une phase YAG (Y₃Al₂(AlO₄)₃).

4. Procédé selon l'une des revendications précédentes dans lequel au moins un des premier et second mélange comprend de la poudre de Si₃N₄ ledit premier ou second mélange comprenant 1 à 2 % en masse de TiO2 de façon à lui donner une teinte plus foncée.

5. Procédé selon l'une des revendications précédentes comprenant l'ajout de plus d'une couche de composition différentes sur la première couche.

6. Procédé selon l'une des revendications précédentes dans lequel, lors de l'étape de frittage, une montée en température d'au moins 50°C par minute, de préférence au moins 90°/minute est appliquée jusqu'à une température plateau entre 1500°C et 2000°C.

7. Procédé selon la revendication 6 dans lequel la température plateau est maintenue constante au moins 2 minutes, de préférence 40 minutes.

8. Procédé selon l'une des revendications précédentes dans lequel la pression appliquée lors du pressage et du frittage est d'au moins 15 MPa, de préférence plus de 40 MPa.

9. Procédé selon l'une des revendications précédentes comprenant une éventuelle étape d'usinage, une étape de polissage ou tout autre étape de finition du composant horloger ou bijoutier obtenu après frittage.

10. Composant horloger (1, 4) comprenant au moins une phase majoritairement composée de Si₃N₄, et au moins une phase de TiN, de TiC et/ou de TiCN, ledit composant présentant une première couleur (2) correspondante à l'une des au moins deux phases et au moins une seconde couleur (3, 5) différente de la première (2) et correspondante à une autre phase, la seconde couleur (3, 5) définissant des veines, des marbrures, des îlots ou des globules décoratifs au-dessus la première couleur (2).

11. Composant horloger selon la revendication 10 dans lequel la première (2) ou la seconde couleur (3, 5) est dorée, argentée ou rosée.

12. Composant horloger selon l'une des revendications 10 ou 11 obtenu selon le procédé de l'une des revendications 1 à 8.

13. Composant horloger selon l'une des revendications 10 à 12 dans lequel ledit composant est un cadran (1, 4), une lunette ou une carrure.

14. Composant horloger selon l'une des revendications 10 à 13 présentant une dureté supérieure ou égale à 1200 HV10.

15. Composant horloger selon l'une des revendications 10 à 14 présentant une densité de 2,70 à 3,3 g cm⁻³.

16. Composant horloger selon l'une des revendications 10 à 15 présentant une ténacité supérieure à 4 MPa.√m.
